# EUROPÄISCHE PATENTSCHRIFT

(11) **EP 2 862 540 B1**
(45) Veröffentlichungstag und Bekanntmachung des Hinweises auf die Patenterteilung: **24.10.2018**
(21) Anmeldenummer: 14184495.1
(22) Anmeldetag: 11.09.2014
(51) Int. Cl.: A61C 13/00, A61C 13/36

(54) **Dentale Transferschablone**
Dental positioning device
Dispositif de positionnement dentaire

(30) Priorität: 17.10.2013 EP 13189179
(43) Veröffentlichungstag der Anmeldung: 22.04.2015
(73) Patentinhaber: Ivoclar Vivadent AG, 9494 Schaan (LI)
(72) Erfinder: Watzke, Ronny, 6800 Feldkirch (AT); Baaske, Thomas, 8885 Mols (CH); Heinz, Markus, 39025 Naturns (IT)
(74) Vertreter: Baronetzky, Klaus

(56) Entgegenhaltungen:
- EP-A1- 2 030 590
- EP-A2- 2 399 542
- JP-A- H09 253 103

## Beschreibung

Die Erfindung betrifft eine Dental-Transferschablonenanordnung gemäß dem Oberbegriff von Anspruch 1.

Bei mittels CAD/CAM gefertigten Prothesen ist es notwendig, künstliche Zähne mit einer Prothesenbasis zu verkleben. Die künstlichen Zähne können sowohl konventionell (industriell) hergestellt als auch mittels CAD/CAM gefertigt sein und aus unterschiedlichen Materialien bestehen.

Um die künstlichen Zähne dauerhaft in der Kavität einer Prothesenbasis zu verkleben, ist eine korrekte Positionierung des jeweiligen Zahnes relativ zur Prothesenbasis notwendig. Dabei ist jeder Zahn oder jede Zahngruppe einzeln und manuell auf die korrekte Passung zu kontrollieren und anschließend einzukleben.

Für die Überprüfung ist bereits eine sogenannte Transferschablone vorgeschlagen worden. Eine derartige Transferschablone ist eine insbesondere per CAD/CAM hergestellte Negativform, wobei Ausnehmungen zum Lagern der Zähne vorgesehen sind. Die Zähne und/oder Zahngruppen werden in den Ausnehmungen der Schablone vorläufig gelagert und zum Verkleben in den Kavitäten der Prothesenbasis dorthin übertragen. Vor/bei dem Verkleben wird mittels der Schablone eine sichere und korrekte Positionierung der Zähne in den Kavitäten der Prothesenbasis gewährleistet.

Eine solche Transferschablone kann von der CAD/CAM-Vorrichtung basierend auf Scan- und CAD- Daten erzeugt werden, die beiden Daten jeweils aus einem dreidimensionalen Scan einer Mundsituation eines Patienten und aus einer Schablonebibliothek in der CAD-Software gewonnen sind. Ein entsprechende Prothesenbasis wird insbesondere von der gleichen CAD/CAM-Vorrichtung basierend auf insbesondere den gleichen Scandaten und den CAD-Daten aus einer Prothesenbasisbibliothek in der CAD-Software erzeugt, so dass die künstlichen Zähne mit Hilfe der Transferschablone transferiert und in der Kavität der Prothesenbasis positioniert und eingeklebt werden können.

Eine derartige Dental-Transferschablone ist aus der WO 2012/155161 A1 bekannt. Gemäß der WO 2012/155161 A1 werden die Prothesenzähne mittels einer dort als "Hilfshaltevorrichtuna" bezeichneten Transferschablone in eine definierte Position gebracht und dort gehalten.

Eine weitere derartige Dental-Transferschablone ist aus der EP 2 030 590 A1 bekannt. Jeder einzelne Prothesenzahn wird vorläufig mittels Wachs oder Harz in der Ausnehmung der dortigen Transferschablone gehalten. Die dortige Stange 18 der Transferschablone ermöglicht eine manuelle Orientierung und Positionierung der Zähne in der Kavitäten der Prothesenbasis.

Jedoch besteht bei der Verwendung von konfektionierten Zähnen das Problem, dass wegen nicht individualisierter Zahnlänge der konfektionierten Zähne Störkontakte auf den Okklusionsflächen auftreten, welche Störkontakte zwar im virtuellen Artikulator in der Software dargestellt und aufgezeigt, aber nicht bei der Fertigstellung der Prothese berücksichtigt werden können. Eine praktikable Lösung dieses Problems, ohne den gefertigten Zahnersatz in einen Artikulator zu übertragen, ist bisher nicht bekannt.

Wenn die Klebeverbindung der künstlichen Zähne an der Prothesenbasis nicht fest genug ist, besteht außerdem bei der Kaubewegung oder anderen Zahnbewegungen im Mund die Gefahr, dass die Zähne nicht stabil genug in der Kavität der Prothesenbasis 10 gehalten sind und eventuell sogar aus der Prothesenbasis herausfallen.

Daher liegt der Erfindung die Aufgabe zugrunde, eine Dental-Transferschablonenanordnung gemäß dem Oberbegriff von Anspruch 1 zu schaffen, die bei Verwendung von konfektionierten Zähnen Störkontakte auf den Okklusionsflächen vermeidet und eine sichere Klebung von Zahnersatz an der Prothesenbasis gewährleisten kann.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die Transferschablone eine der Okklusalebene zugewandte Okkusalseite aufweist. Nachdem konfektionierte Zähne mittels der Transferschablone in die Kavität der Prothesenbasis eingebracht und positioniert werden, führen die über die Okklusalseite der Transferschablone hinausragende Zahnbereiche zu okklusalen/inzisalen Fehlkontakten. Mittels der Transferschablone können diese Zahnbereiche zum gleichmäßigen Zahnreihenschluss manuell abgeschliffen werden.

Ferner ist erfindungsgemäß eine sichere Klebung jedes Zahnes in der Prothesenbasis gewährleistet. Die Klebefläche jedes Zahnes in der Prothesenbasis weist erfindungsgemäß einen vorgegebenen minimalen Schwellenwert, insbesondere mindestens 10 mm², bevorzugt mindestens 18 mm², und besonders bevorzugt mindestens 25 mm², auf, welcher Schwellenwert insbesondere in der CAD-Software der CAD/CAM-Vorrichtung zur Herstellung der Prothesenbasis festgelegt ist. Dieser Wert ist auch - je nach Klebstoff - steigerbar, beispielhaft auf mindestens 39 mm².

In vorteilhafter Ausgestaltung ist es vorgesehen, dass die Transferschablone in ihrer Schablonenform mit Ausnehmungen für Zähne per Rapid-Prototyping oder per Fräsen erzeugt ist. Die Innenflächen der Ausnehmungen in der Transferschablone, die den okklusalen/inzisalen Außenflächen der Zähne entsprechen, sind basierend auf einer Zahnbibliothek erzeugt, welche Außenflächen in der CAD/CAM-Vorrichtung entsprechend insbesondere vorgefertigten Zähnen abgespeichert sind.

In vorteilhafter Ausgestaltung ist es vorgesehen, dass die Transferschablone aus nicht steifen und im Vergleich mit den Zähnen nachgiebigen Material, insbesondere aus Kunststoff, herstellt ist, so dass die Zähne in der Ausnehmungen der Transferschablone mit Hilfe einer begrenzten Verformungskraft an den Innenflächen der Ausnehmungen der Transferschablone gehalten und in die Prothesenbasis transferiert werden können.

In vorteilhafter Ausgestaltung ist es vorgesehen, dass die Transferschablone aus geeigneten Materialien, insbesondere aus Metall oder Kunststoff, bevorzugt zur besseren Kontrolle der positionierten Zähne aus transparentem Kunststoff, hergestellt ist.

In vorteilhafter Ausgestaltung ist es vorgesehen, dass bei der Berechnung der Flächen der Ausnehmungen in der Transferschablone ein herstellungsbedingter Schrumpfungsfaktor der konfektionierten Zähne von etwa ±100 µm berücksichtigt wird, welcher Faktor dem Schrumpfungsgrad der konfektionierten Zähne wegen thermischer Ausdehnung entspricht.

Bei Verwendung von konfektionierten Zähnen ragen wegen der nicht individualisierten Zahnlänge einige Zähne über die Okklusalseite der Transferschablone hinaus, was zu den Störkontakten in der Okklusalebene führt. Erfindungsgemäß können die Transferschablone durchtretende Bereiche eines Zahns, dessen Höhe größer als die Höhenerstreckung von Transferschablone und Prothesenbasis im aufeinander gelegten Zustand ist, zur Optimierung der Interkuspidation manuell beschliffen werden.

In vorteilhafter Ausgestaltung ist es vorgesehen, dass die Höhenlage der Zähne in der Transferschablone basierend auf CAD- und Scandaten und damit indirekt auf Patientendaten festaeleat ist und dass die basale Seite der Prothesenbasis durchtretende Bereiche eines Zahns, dessen Höhe größer ist als die Höhenerstreckung von Transferschablonen und Prothesenbasis und im aufeinander gelegten Zustand dieser, mit umgebenden Oberflächen im Wesentlichen bündig abschleifbar ist.

In vorteilhafter Ausgestaltung ist es vorgesehen, dass die Transferschablone durch die CAD/CAM-Vorrichtung erzeugte Zahnausnehmungen aufweist, die so eine Position des Zahns im Raum festlegen, wobei jeder Zahn insbesondere 5% bis 90% seiner Längserstreckung von der Transferschablone gehalten wird.

In vorteilhafter Ausgestaltung ist es vorgesehen, dass die Transferschablone und die Prothesenbasis im zusammengesetzten Zustand einen die Zähne umgebenden Freiraum belassen, dessen Höhe insbesondere teilweise 0% bis 50%, bevorzugt etwa 20% der Höhe der Zähne beträgt.

In vorteilhafter Ausgestaltung ist es vorgesehen, dass die Transferschablone und die Prothesenbasis im aufeinandergesetzten Zustand über eine Mehrzahl, insbesondere drei Stützstellen, aneinander abgestützt und in eine definierte Relativposition bei eingesetzten Zähnen gebracht sind.

In vorteilhafter Ausgestaltung ist es vorgesehen, dass die Transferschablone zusammen mit der Prothesenbasis eingesetzte Zähne in allen drei Raumrichtungen fest lagert, und in diesem Zustand sind erfindungsgemäß etwaige okklusale Fehlkontakte der Zähne, die die Transferschablone durchtreten, ohne zusätzliche und separate Stützkontakte für die einzelnen Zähne abschleif- oder abfräsbar.

In vorteilhafter Ausgestaltung ist es vorgesehen, dass der Schwellenwert der Klebefläche der Zähne an der Prothesenbasis unterschiedlich für unterschiedliche Zahntypen - Schneidezähne, Prämolaren und Molaren - ist und zur entsprechenden Anpassung eine Vergrößerung der Klebefläche durch die CAD-Software der CAD/CAM-Vorrichtung angefordert wird.

In vorteilhafter Ausgestaltung ist es vorgesehen, dass der Schwellenwert der Klebefläche der Zähne an der Prothesenbasis unterschiedlich für unterschiedliche Zähne, insbesondere für konfektionierte Zähne mit unterschiedlichen Zahnlängen ist, und zur entsprechenden Anpassung eine Vergrößerung der Klebefläche durch die CAD-Software der CAD/CAM-Vorrichtung angefordert wird.

In vorteilhafter Ausgestaltung ist es vorgesehen, dass zur Vergrößerung der Klebefläche der Zähne an der Prothesenbasis sich der zervikale Bereich der Ausnehmungen der Prothesenbasis in die inzisale Richtung mittels der CAD/CAM-Vorrichtung erstrecken kann.

In vorteilhafter Ausgestaltung ist es vorgesehen, dass die CAD/CAM-Vorrichtung bei der Festlegung der Höhenlage der Zähne in den Ausnehmungen in der Prothesenbasis dort einen Klebespalt erfindungsgemäß mit einer vorgegebenen Dicke berücksichtigt, insbesondere teilweise 0 µm bis 500 µm, bevorzugt 50 µm bis 250 µm, dass also die Außenform um diesen Spalt größer als der zervikale Bereich der Zähne ausgelegt und so die Höhenlage jedes Zahns exakt festgelegt ist.

In vorteilhafter Ausgestaltung ist es vorgesehen, dass auf der vestibulären Seite an jedem Zahn Fenster-Aussparungen angeordnet sind, um die korrekte Höhenlage der Zähne in den Innenflächen der Ausnehmungen in der Transferschablone zu kontrollieren.

In vorteilhafter Ausgestaltung ist es vorgesehen, dass die Transferschablone wegen des Schliffes der durchtretenden Zähne entweder für Unterkiefer- oder Oberkieferprothesen verwendet wird.

In vorteilhafter Ausgestaltung ist es vorgesehen, dass durch die Transferschablone die relative dreidimensionale Lage von Oberkiefer- oder Unterkieferprothese fixiert ist, so dass die fertigen Prothesen in einen um die vertikale Achse verschiebbaren Artikulator/Okkludator gebracht werden können, um eine okklusale Korrektur an den Prothesenzähnen vorzunehmen.

Ein solcher Artikulator vermag die Bewegungsabläufe des menschlichen Kiefers zu simulieren. Das Kiefergelenk als solches bewegt sich bei einer Absenkung der Bisslage oder einer Erhöhung derselben nach dem Prinzip einer Türangel, d.h., eine Anhebung im anterioren Bereich um 3 mm entspricht derjenigen im Mastikationsbereich zirka 1/3 bis 1 mm.

Die Gelenksgeometrie unterscheidet sich je nach Artikulatortyp. Um diese Vielfalt an Gelenksgeometrien zu ermöglichen, wird die vertikale Absenkung für alle Artikulatoren in gleicher Weise vorgenommen. Der Adapter im Artikulator ist für die Gelenkgeometrie gleich. Dadurch bleibt die Gelenksgeometrie nicht angetastet.

Durch diesen Adapter im Artikulator werden die Zahnreihen der oberen und unteren Prothese in Kontakt, also in Okklusion gebracht. Durch diese Möglichkeit kann die zentrische Lage der Zahnreihen des Ober- und Unterkiefers überprüft, gegebenenfalls schleiftechnisch nachjustiert werden. Im Fall von funktionellen Retuschen kann die dynamische Justierung und das selektive Einschleifen spezifisch im Artikulator erfolgen. Dazu werden dann je nach Artikulatortyp zumindest die Gelenksneigung und der Benettwinkel als Mindestanforderung eingestellt.

In vorteilhafter Ausgestaltung ist es vorgesehen, dass die Transferschablone wiederverwendbar ist und mit dieser bei bis zu zwei Prothesenbasen Zähne geklebt werden können.

In vorteilhafter Ausgestaltung ist es vorgesehen, dass insbesondere durch die CAD/CAM-Vorrichtung ein Abstand zwischen Zahnpositionen für Oberkiefer- oder Unterkieferprothese festlegbar ist, der mit der vertikalen Verschiebeachse des Artikulators/Okkludators korreliert ist.

In vorteilhafter Ausgestaltung ist es vorgesehen, dass konfektionierte Zähnen unter Realisierung von Durchbrechung in der Schablone zur okklusalen Korrektur in der Okklusalebene der Zähne abgeschliffen werden können.

Weitere Vorteile, Einzelheiten und Merkmale ergeben sich aus der nachstehenden Beschreibung eines Ausführungsbeispiels anhang der Zeichnung.

Es zeigen:
- Fig. 1: eine schematisch dargestellte erfindungsgemäße Ausführungsform der Dental-Transferschablonenanordnung in Vorderansicht;
- Fig. 2: die Ausführungsform der Dental-Transferschablonenanordnung gemäß Fig. 1 in Draufsicht (ohne Prothesenbasis dargestellt);
- Fig. 3: die Ausführungsform der Dental-Transferschablonenanordnung gemäß Fig. 1 in Seitenansicht;
- Fig. 4: eine weitere Ausführungsform der Dental-Transferschablonenanordung (ohne Transferschablone dagestellt);
- Fig. 5: die Ausführungsform gemäß Fig. 4 in Seitenansicht;
- Fig. 6: die Ausführungsform gemäß Fig. 4 in Seitenansicht;
- Fig. 7: die Haltevorrichtung und eine Ausführungsform der Dental-Transferschablonenanordnung;
- Fig. 8: der Distanzhalter und dessen Anordnung in der Kavität der Prothesenbasis; und
- Fig. 9: ein schematisch dargestellter Artikulator mit Prothesen.

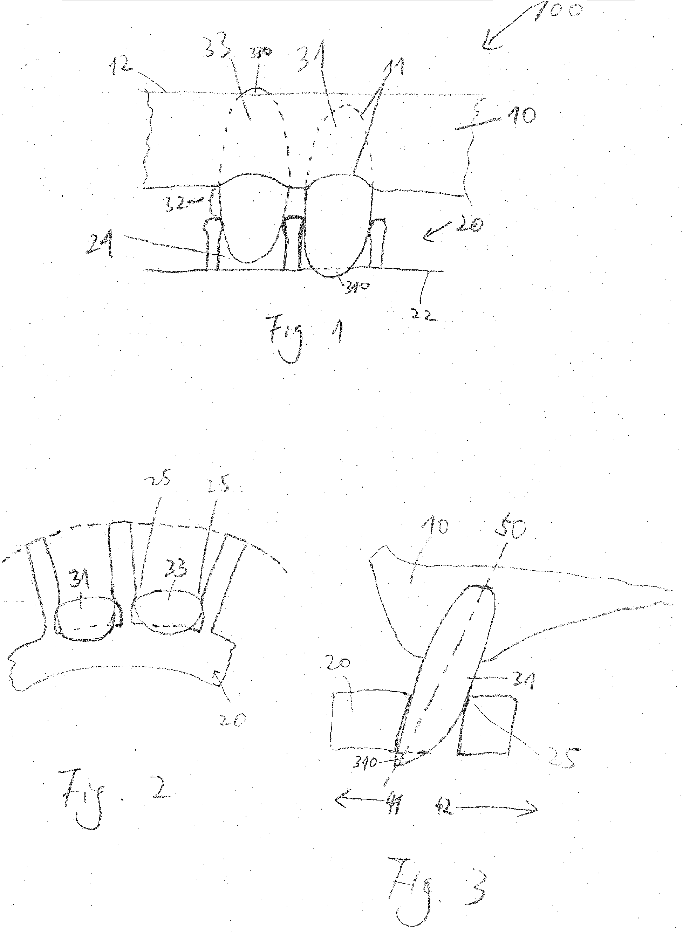

Die in Fig. 1 dargestellte Dental-Transferschablonenanordnung 100 weist eine Transferschablone 20 und eine (Oberkiefer-)Prothesenbasis 10 auf, wobei beide eine Vielzahl der Ausnehmungen 21 und 11 für Schneidezähne aufweisen, von denen die Schneidezähne 31 und 33 in Fig. 1 dargestellt sind. In die Transferschablonen-Ausnehmungen 21 passen inzisale und/oder okklusale Bereiche und in die Prothesenbasis-Ausnehmungen 11 passen zervikale Bereiche der Zähne 31 und 33. Die Schneidezähne 31 und 33 sind je in die Prothesenbasis-Ausnehmungen 11 einzukleben.

Die Zähne 31 und 33 werden mittels der Transferschablone 20 in beliebiger geeigneter Weise, in die Kavitäten/Ausnehmungen 11 der Prothesenbasis 10 eingebracht, indem die Zähne 31 und 33 beispielsweise mit Wachs, Harz oder einem anderen Klebstoff in den Innenflächen der Ausnehmungen 21 der Transferschablone 20 vorläufig gesichert werden oder mit Hilfe der Verformungskraft von den Innenflächen der Ausnehmungen 21 der Transferschablone die Zähne 31 und 33 in der Transferschablone 20 gehalten sind. Bevorzugt ist die Transferschablone 10 zur besseren Kontrolle der positionierten Zähne aus transparentem Kunststoff hergestellt.

Anschließend werden die Zähne 31 und 33 je mit Hilfe der Transferschablone 20 in die Prothesenbasis 10 positioniert und eingeklebt.

Der Bereich 310 des konfektionierten Zahns 31, welcher Bereich über die dortige Okklusalseite 22 der Transferschablone 20 hinausragt, führt in der Okklusalebene zu Störkontakten. Erfindungsgemäß dient die Okklusalseite 22 der Transferschablone 20 als Höhenreferenz der okklusalen/inzisalen Ebene. Der über die Okklusalseite 22 hinausragende Bereich 310 kann erfindungsgemäß zur Optimierung der Interkuspidation manuell abgeschliffen werden.

An der vestibulären Seite der Zähne 31 und 33 sind erfindungsgemäß Fenster-Aussparungen der Transferschablone 20 angeordnet, um die korrekte Höhenlage der Zähne 31 und 33 in den Innenflächen der Ausnehmungen 21 in der Transferschablone 20 zu kontrollieren.

Als eine alternative Lösung, um Störkontakte zu vermeiden, kann es vorgesehen sein, dass für einen etwas längeren konfektionierten Zahn 33 sein der Transferschablone 20 zugewandtes Ende nicht über die Okklusalseite hinausragt, sondern dass man das zervikale Ende des Zahnes 33 die basale Seite der Prothesenbasis 10 durchtreten lässt.

Der die Prothesenbasis 10 durchtretende Bereich 330 wird im Wesentlichen bündig entfernt, insbesondere beschliffen oder abgefräst.

In der Ausführungsform gemäß Fig. 1 legen die Ausnehmungen 21 der Transferschablone 20 die Position der Zähne 31 und 33 im Raum so fest, dass jeder Zahn zu etwa 30% von der Transferschablone 20 gehalten ist. In einer weiteren Ausführungsform beträgt dieser Wert 5% bis 90%.

Die in Fig. 1 dargestellte Transferschablone 20 wird mit der Prothesenbasis 10 dergestalt zusammengeführt, dass die die Zähne 31 und 33 umgebende Transferschablone 20 keinen physikalischen Kontakt mit der Prothesenbasis 10 hat. Es ist ein die Zähne 31 und 33 umgebender Freiraum 32, dessen Höhe insbesondere etwa 20% der Zahnlänge beträgt, vorgesehen.

In einer weiteren Ausführungsform (nicht dargestellt) sind die Transferschablone und die Prothesenbasis im aufeinandergesetzten Zustand über eine Mehrzahl, insbesondere drei Stützstellen, aneinander abgestützt und in eine definierte Relativposition bei eingesetzten Zähnen gebracht.

In Fig. 2 ist gemäß Fig. 1 eine erfindungsgemäße Transferschablone 20 mit den gehaltenen Zähnen 31 und 33 in Draufsicht dargestellt. Aus der Verbindung von Fig. 2 und 3 ist es ersichtlich, dass die Zähne 31 und 33 jeweils mindestens drei Stützstellen 25 an der Transferschablone 20 haben, damit die Zähne 31 und 33 in den Ausnehmungen 21 der Transferschablone 20 gesichert werden können.

In einer bevorzugten Ausführungsform werden die Zähne 31 und 33 mit Hilfe der elastischen Verformungskraft von den Stützstellen 25 der Innenflächen der Ausnehmungen 21 der Transferschablone 20 in allen drei Raumrichtungen fest gelagert.

In Fig. 3 ist gemäß Fig. 1 eine erfindungsgemäße Dental-Transferschablonenanordnung 100 in Seitenansicht dargestellt. Die Pfeile 41 und 42 weisen jeweils auf die labiale und die linguale Richtung hin. In der in Fig. 3 dargestellten Ausführungsform beträgt ein Winkel zwischen der vertikalen Achse und der Wurzelachse 50 etwa 10° bis 35°.

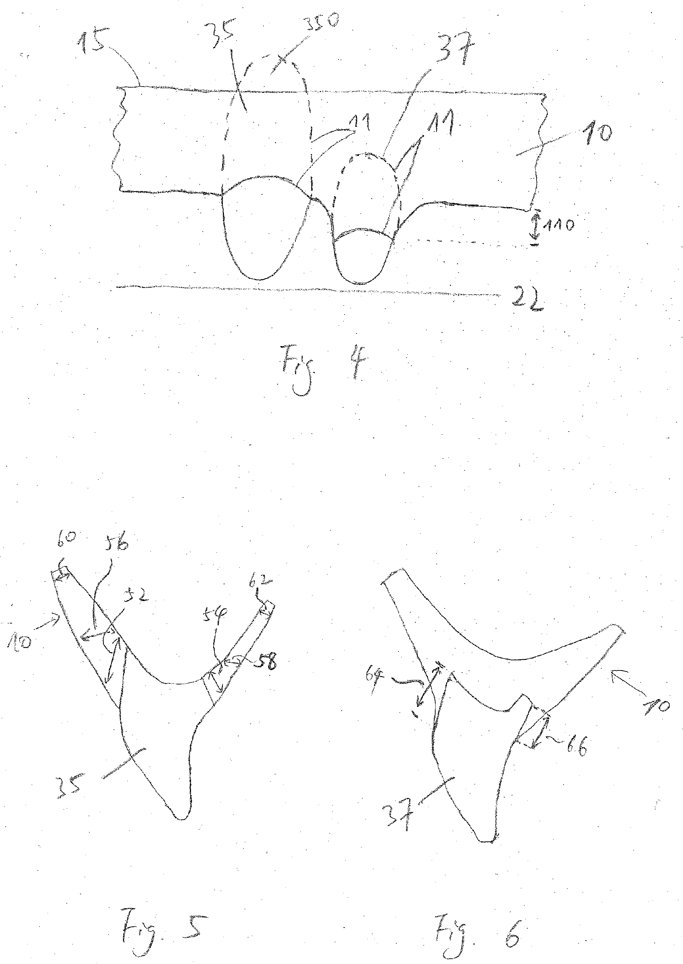

Eine weitere erfindungsgemäße Ausführungsform ist in Fig. 4 dargestellt. Es ist ersichtlich, dass die Höhe des dortigen (konfektionierten) Zahnes 35 vergleichweise zu groß für die Prothesenbasis 10 ist. Wenn der Zahn 35 ohne weitere Bearbeitung in die Kavität der Prothesenbasis 10 eingeklebt wird, entsteht dann ein starker Störkontakt in der Okklusalebene. Darüber hinaus besteht die Gefahr, dass bei der Mastikationsbewegung der Zahn 35 instabil in der Kavität der Prothesenbasis 10 gehalten ist und eventuell sogar aus der Prothesenbasis 10 herausfällt, und zwar wegen der auf vertikaler Ebene proportional mit den Flächenausdehnungen des Zahnes 35 zu gringen Klebefläche des Zahnes 35 an der Prothesenbasis 10. Gemäß der Hebelwirkung ist der der Klebekraft entsprechende Lastarm etwa kürzer als während der Mastikationsbewegung der der Reibungskraft entsprechende Kraftarm.

Erfindungsgemäß ist es günstig, dass sich der Zahn 35 in der Prothesenbasis 10 mit Hilfe der Transferschablone 20 (nicht dargestellt) labial nach unten bis zu der Okkusalebene 22 zur Vermeidung des Störkontaktes sichern lässt, wie in Fig. 4 dargestellt. Wegen der größeren Länge des Zahnes 35 durchtritt der Zahn 35 die Basalfläche 15 der Prothesenbasis 10. Hierdurch wird die Klebefläche vergrößert. Der durchtretende Bereich 350 wird dann erfindungsgemäß beschliffen. Konsequent ist die Lastarm-Kraftarm-Verhältnis verbessert und daher eine sichere Klebung gewährleistet.

Gemäß Fig. 4 ist ferner ein Zahn 37 vorgesehen, dessen Höhe vergleichweise zu klein für die Prothesenbasis 10 ist. Falls der Zahn 37 in sich bekannter Weise in die Kavität der Prothesenbasis 10 eingeklebt wird, ist auch wegen der Hebelwirkung beim Kauen, wie beim oben genannten Fall des Zahnes 35, die Klebefläche zu gering, um eine sichere Klebung zu gewährleisten.

Erfindungsgemäß ist es besonders günstig, dass die CAD-Software zur Herstellung der Prothesenbasis vor der Gefahr warnt, dass keine ausreichende Klebefläche zur Verfügung steht.

Erfindungsgemäß ist es weiter günstig, dass die Kavität 11 der Prothesenbasis 10 unter der Steuerung durch die CAD/CAM-Vorrichtung so umgebildet wird, dass sich der zervikale Bereich der Kavität 11 in die inzisale Richtung erstreckt. Die Erstreckungsausdehnung wird in Fig. 4 als Höhe 110 bezeichnet. Die in Fig. 4 dargestellte verlängerte Kavität 11 der Prothesenbasis 10 ermöglicht erfindungsgemäß eine zusätzliche Klebefläche des Zahnes 37 an der Prothesenbasis 10. Hierdurch wird eine sichere Klebeverbindung gewährleistet.

In Fig. 5 und Fig. 6 sind Zähne 35 und 37 in Seitenansicht dargestellt.

Die Dicke des Kragenbereiches der Prothesenbasis 10 beim Zervikalrand der Zähne 35 und 37 labial 56 (bzw. bukkal) und palatinal 58 (bzw. lingual) muss mehr als 2 mm sein.

Die Dicke am minimal höchsten Punkt (2 mm) des Kragenbereiches 60 und 62 muss mehr als 0,5 mm sein. Danach kann die Dicke auslaufend sein.

Erfindungsgemäß ist es günstig, dass die Eckwerte bezüglich der Minimalanforderungen der Klebung in der CAD-Software einstellbar sind, wobei hier zwei Fälle beispielhaft erläutert werden:
Fall 1 - Klebung ohne oder teilweise mit basalem Kontakt zur Prothesenbasis 10 entsprechend dem Zahn 35 gemäß Fig. 5:
   minimale Höhe des Kragenbereiches 52 und 54 der Prothesenbasis 10 muss mehr als 2 mm sein, über 360° rundum;
Fall 2 - Klebung mit vollem basalen Kontakt zur Prothesenbasis 10 entsprechend dem Zahn 37 gemäß Fig. 6:
   minimale Höhe des Kragenbereiches 64 und 66 der Prothesenbasis 10 muss mehr als 2 mm sein, über 180° rundum, bevorzugt labial und palatinal (bzw. bukkal und lingual) einschließlich, und die minimale Höhe des Kragenbereiches der Prothesenbasis 10 für den restlichen 180° muss mehr als 1 mm sein.

Im Fall 1 sollte optimale Kragenhöhe mehr als 3 mm sein, wobei ein Wulst oder eine Ummantelung vorgesehen ist, die eine Verlängerund der Kavität 11 der Prothesenbasis 10 in Fig. 4 dargestellt, wobei sich mindestens 50% der Ummantelung bevorzugt im lingual bzw. palatinalen Bereich befindet.

Erfindungsgemäß ist es weiter günstig, dass basierend auf den obigen Eckwerten die minimale Klebefläche, die eine sichere Klebung des Zahnes an der Prothesenbasis gewährleistet, ausgerechnet werden kann und insbesondere in der CAD-Software zur Herstellung der Prothesenbasis 10 festgelegt ist.

Wird die momentan kleinste Zahnform A3 der Anmelderin ohne Basalmulde herangezogen, beträgt der Umfang des Zahnes A3 gemessen in der Kragenhöhenmitte 14,6 mm und die Bodenfläche des Zahnes A3 16,97 mm² (der nachfolgende Algorithmus ist bei alternativen Zahnformen mit anderen Größen oder von anderen Firmen auch anwenbar).

Im oben genannten Fall 1, nämlich Klebung ohne oder teilweise mit basalem Kontakt zur Prothesenbasis, ergibt sich eine minimale Klebefläche von 14,6 mm × 2 mm = 29,2 mm²

Im oben genannten Fall 2, nämlich Klebung mit vollem basalen Kontakt zur Prothesenbasis, soll die gesamte Klebefläche aus der Kombination der Kragenfläche und Basalfläche ausgerechnet werden, wobei sich die minimale Klebefläche so ergibt:
- Kragenfläche über 180° mit 2 mm Höhe = 14,6 mm / 2 × 2 mm = 14,6 mm²;
- Kragenfläche über 180° mit 1 mm Höhe = 14,6 mm / 2 × 1 mm = 7,3 mm²;
- Basalfläche mit vollem basalen Kontakt zur Prothesenbasis =16,97 mm² ;
- minimale Klebefläche = 14,6 mm² + 7,3 mm² + 16,97 mm² = 38,87 mm².

Gemäß dem Moffit-Verbundtest (Aushebeltest) ergibt sich für die Zähne mit den oben genannten minimalen Klebeflächen eine Bruchlast um 500N. Hierbei ist es günstig, unmittelbar vor der Klebung ein Aufrauhen vorzunehmen, bevorzugt mittels Sandstrahlen mit Aluminiumoxid-Partikeln mit eine Korngröße von 100 µm und einem Druck von 1 bis 2 bar. Ferner kann es vorteilhaft sein, die Klebeflächen vorzubenetzen, z.B. mit ProBase cold Monomer der vorliegenden Anmelderin, insbesondere, wenn Komposit-Zähne verwendet werden, bei denen die Schneideschicht bios in den zervikalen Bereich hineinreicht.

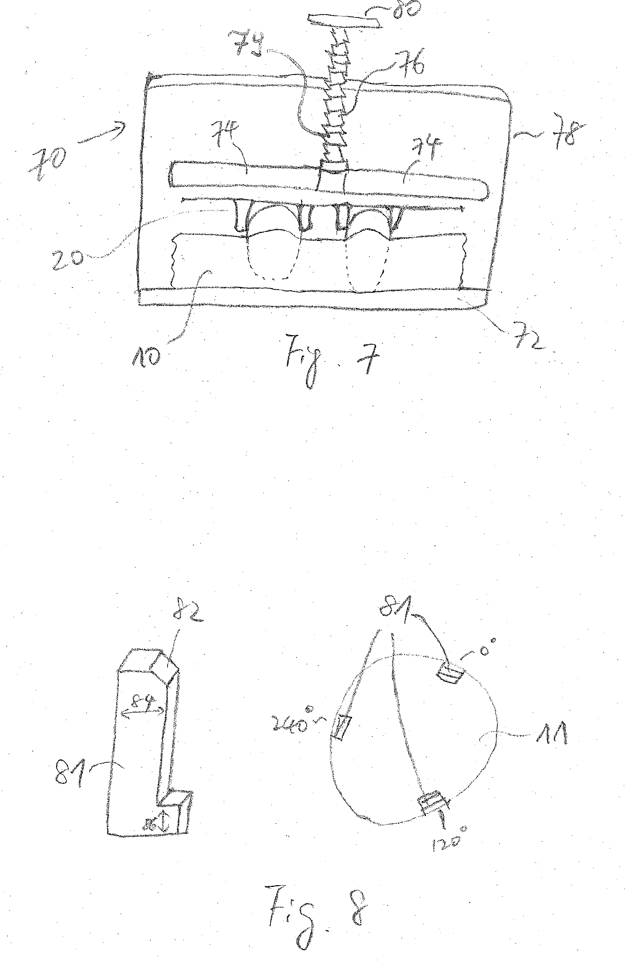

In Fig. 7 ist eine Haltevorrichtung 70 für die Unterkiefer- und/oder Oberkieferprothese dargestellt, welche Vorrichtung die Fixierung der Zähne an der Prothesenbasis 10 oder das Aushärten des Klebers unterstützen/sichern kann.

Die Haltevorrichtung 70 weist ein Substrat 72, einen Rahmen 78, mindestens drei Balken 74 (nur zwei davon in Fig. 7 dargestellt), einen Stempel 79 mit Gewinde 76 und einen Drehgriff 72 auf.

Die Prothesenbasis 10 zusammen mit den Zähnen in den Kavitäten dieser und mit der Transferschablone 20 kann auf das Substrat 72 der Haltevorrichtung 70 aufgebracht werden und dort fixiert werden.

Die Balken 74 sind durch Drehen des Drehgriffs 80 in der vertikalen Richtung über den Stempel 79 heb- und senkbar. Wenn gemäß Fig. 7 die Balken 74 nach unten bis zur Oberseite der Transferschablone 20 und noch weiter abgesenkt werden, wird ein Druck von den Balken 74 nach unten über die Transferschablone 20 auf die Zähne und die Prothesenbasis 10 ausgeübt.

Die Prothesenbasis 10 wird dann von den Zähnen und dem Substrat 72 der Haltevorrichtung 70 eingespannt und so eine Fixierung der Zähne an der Prothesenbasis 10 und ein Aushärten des Klebers unterstützt. Eine mittige Anordnung des Stempels 79 ergibt eine gleichmäßige Haltekraft.

Erfindungsgemäß ist es weiter günstig, dass in der CAD-Software der Klebespalt zwischen Zähnen und Prothesenbasis mit 100 µm definiert ist. Ist bei der Positionierung und der Klebung die Zähne in die Kavitäten der Prothesenbasis 10 genauer zu zentrieren und es erwünscht, den Klebespalt von 100 µm um die Zähne herum zu sichern, werden erfindungsgemäß günstig mindestens drei Distanzhalter 81, wie in Fig. 8 dargestellt, verwendet. Ohne Distanzhalter betrug der Klebespalt zwischen 78 und 160µm, mit diesen war die Breitenschwankung nicht meßbar.

Die Zahn-Ausnehmung 11 der Prothesenbasis 10 ist gemäß Fig. 8 in Draufsicht dargestellt. Die drei Distanzhalter 81 sind an der Innenfläche der etwa kreisförmigen Zahn-Ausnehmung 11 120° voneinander entfernt nach innen vorragend senkrecht verlaufend zu der horizontalen Ebene angeordnet.

Das Oberteil 82 der Distanzhalter 81 ist zum leichten Einführen der Zähne in die Kavität 11 der Prothesenbasis 10 abgewinkelt. Der seitliche Abstand und der basale Abstand zwischen Zähnen und der Kavität der Prothesenbasis 10, welche Abstände als Klebespalt durch die Distanzhalter 81 ermöglicht werden, entsprechen jeweils der Länge 84 und der Höhe 86, welche je 100 µm betragen.

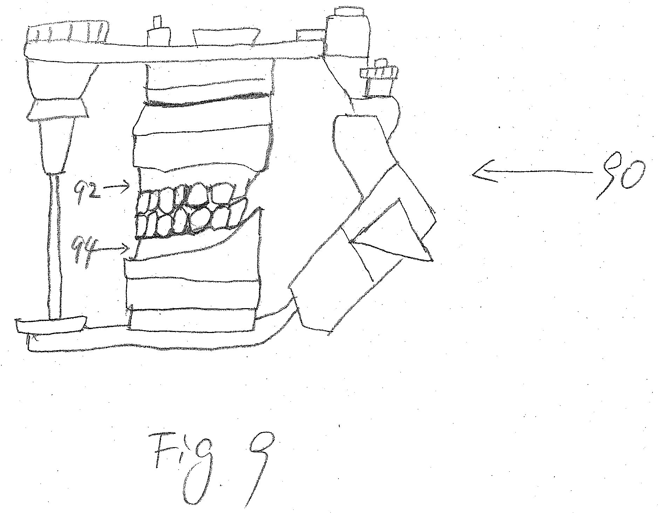

In Fig. 9 ist ein Artikulator 90 mit Prothesen schematisch dargestellt. Die fertigen Prothesen mit dem Oberkieferteil 92 und dem Unterkieferteil 94 werden in diesen um die vertikale Achse verschiebbaren Artikulator eingebracht, um eine okklusale Korrektur an den Prothesenzähnen vorzunehmen.

## Patentansprüche

1. Dental-Transferschablonenanordnung, mit einer Transferschablone und einer Prothesenbasis, - wobei beide eine Vielzahl von Ausnehmungen für konfektionierte Zähne aufweisen, wobei in die Ausnehmungen der Transferschablone inzisale und/oder okklusale Bereiche und in die Prothesenbasis-Ausnehmungen (21) zervikale Bereiche von konfektionierten Zähnen passen, - wobei die konfektionierten Zähne in die Prothesenbasis-Ausnehmungen (11) einklebbar sind, **dadurch gekennzeichnet, dass** - die Transferschablone (20) eine der Okklusalebene zugewandte Okklusalseite (22) aufweist, welche als Höhenreferenz der okklusalen/inzisalen Ebene dient und als Referenz für das Vorliegen von okklusalen Störkontakten dergestalt realisiert ist, dass, wenn konfektionierte Zähne mittels der Transferschablone in die Ausnehmungen der Prothesenbasis eingebracht und positioniert werden, über die Okklusalseite (22) der Transferschablone (20) hinausragende Zahnbereiche (310) zu okklusalen Störkontakten führen und diese Zahnbereiche (310) zum gleichmäßigen Zahnreihenschluss schleifbar sind.

2. Dental-Transferschablonenanordnung, mit einer Transferschablone und einer Prothesenbasis nach Anspruch 1, **dadurch gekennzeichnet, dass** die Klebefläche jedes Zahnes (31, 33, 35, 37) an der Prothesenbasis (10) einen minimalen Schwellenwert von mindestens 10 mm², bevorzugt mindestens 18 mm², und besonders bevorzugt mindestens 25 mm, aufweist.

3. Transferschablonenanordnung nach Anspruch 1, **dadurch gekennzeichnet, dass** zervikale Bereiche von Zähnen unter Verwendung der Transferschablone (20) in die Prothesenbasis-Zahnausnehmungen je einbringbar und dort einklebbar sind.

4. Transferschablonenanordnung nach einem der vorhergehenden Ansprüche, **dadurch gekennzeichnet, dass** die Transferschablone (20) mit Ausnehmungen (21) für die konfektionierten Zähne (31, 33, 35, 37) versehen ist und dass die Innenflächen der Ausnehmungen (21) in der Transferschablone (20), den okklusalen/inzisalen Außenflächen der Zähne (31, 33, 35, 37) entsprechen.

5. Transferschablonenanordnung nach einem der vorhergehenden Ansprüche, **dadurch gekennzeichnet, dass** zur Vergrößerung der Klebefläche in die inzisale/okklusale Richtung ein Wulst oder eine Ummantelung vorgesehen ist, so dass sich der zervikale Bereich der Ausnehmungen (11) der Prothesenbasis (10) in die inzisale/okklusale Richtung erstreckt.

6. Transferschablonenanordnung nach einem der vorhergehenden Ansprüche, **dadurch gekennzeichnet, dass** eine Höhenlage der konfektionierten Zähne (31, 33, 35, 37) in der Transferschablone (20) festgelegt ist, und dass die basale Seite der Prothesenbasis (10) durchtretende Bereiche eines konfektionierten Zahns (31, 33, 35, 37), dessen Höhe größer ist als die Höhenerstreckung der Transferschablone (20) und der Prothesenbasis (10) im aufeinander gelegten Zustand dieser, im Wesentlichen bündig abschleifbar sind.

7. Transferschablonenanordnung nach einem der vorhergehenden Ansprüche, **dadurch gekennzeichnet, dass** die ZahnAusnehmungen (21) der Transferschablone (20) eine Position des Zahns (31, 33) im Raum festlegen, wobei jeder Zahn (31, 33) mit einem Anteil seiner Längserstreckung von der Transferschablone (20) gehalten ist.

8. Transferschablonenanordnung nach einem der vorhergehenden Ansprüche, **dadurch gekennzeichnet, dass** die Transferschablone (20) und die Prothesenbasis (10) im zusammengesetzten Zustand einen Freiraum belassen, welcher die konfektionierten Zähne (31, 33) umgibt, wobei die Höhe des Freiraums einem Anteil der Höhe der Zähne (31, 33) entspricht.

9. Transferschablonenanordnung nach einem der vorhergehenden Ansprüche, **dadurch gekennzeichnet, dass** die Transferschablone (20) und die Prothesenbasis (10) im aufeinandergesetzten Zustand über eine Mehrzahl von Stützstellen, insbesondere drei Stützstellen, aneinander abgestützt sind und in eine definierte Relativposition zueinander bei eingesetzten konfektionierten Zähnen (31, 33) bringbar sind.

10. Transferschablonenanordnung nach einem der vorhergehenden Ansprüche, **dadurch gekennzeichnet, dass** die Transferschablone (20), zusammen mit der Prothesenbasis (10), eingesetzte Zähne (31, 33) in allen drei Raumrichtungen fest lagert, und dass in diesem Zustand etwaige okklusale Fehlkontakte der Zähne (31, 33), die die Transferschablone (20) durchtreten, ohne zusätzliche und separate Stützkontakte für die einzelnen Zähne (31, 33) abschleif- oder abfräsbar sind.

11. Transferschablonenanordnung nach einem der vorhergehenden Ansprüche, **dadurch gekennzeichnet, dass** auf der vestibulären Seite an jedem Zahn (31, 33) Fenster-Aussparungen der Transferschablone (20) angeordnet sind, so dass die korrekte Höhenlage der Zähne (31, 33) in den Innenflächen der Ausnehmungen (21) in der Transferschablone (20) kontrollierbar ist.

12. Transferschablonenanordnung nach einem der vorhergehenden Ansprüche, **dadurch gekennzeichnet, dass** die Transferschablone (20) entweder für Unterkiefer- oder Oberkieferprothesen vorgesehen ist.

13. Verfahren zur Herstellung der Transferschablonenanordnung nach einem der vorhergehenden Ansprüche, **dadurch gekennzeichnet, dass** die Transferschablone mit einer CAD/CAM-Vorrichtung hergestellt wird und die Prothesenbasis mit einer CAD/CAM-Vorrichtung, insbesondere mit der gleichen CAD/CAM-Vorrichtung, hergestellt wird.

14. Verfahren nach Anspruch 13, **dadurch gekennzeichnet, dass** die Klebefläche jedes Zahnes (31, 33, 35, 37) an der Prothesenbasis (10) einen vorgegebenen minimalen Schwellenwert, insbesondere mindestens 10 mm², bevorzugt mindestens 18 mm², und besonders bevorzugt mindestens 25 mm², aufweist, welcher Schwellenwert in der CAD-Software der CAD/ CAM-Vorrichtung zur Herstellung der Prothesenbasis festgelegt ist.

15. Verfahren nach Anspruch 14, **dadurch gekennzeichnet, dass** der in der CAD-Software der CAD/CAM-Vorrichtung festgelegte Schwellenwert unterschiedlich für unterschiedliche Zahntypen - Schneidezähne, Eckzähne, Prämolaren und Molaren - ist und zur entsprechenden Anpassung der Prothesenbasis (10) eine Vergrößerung der Klebefläche der in der Prothesenbasis aufzunehmenden konfektionierten Zähne durch die CAD-Software der CAD/CAM Vorrichtung angefordert wird.

16. Verfahren nach Anspruch 14 oder 15, **dadurch gekennzeichnet, dass** der in der CAD-Software der CAD/CAM-Vorrichtung festgelegte Schwellenwert unterschiedlich für unterschiedliche Zähne (31, 33, 35, 37), insbesondere für konfektionierte Zähne mit unterschiedlichen Zahnlängen, ist und zur entsprechenden Anpassung der Prothesenbasis (10) eine Vergrößerung der Klebefläche der in der Prothesenbasis aufzunehmenden konfektionierten Zähne durch die CAD-Software der CAD/CAM-Vorrichtung angefordert wird.

17. Verfahren nach einem der vorhergehenden Ansprüche 13-16, **dadurch gekennzeichnet, dass** bei der Berechnung der Flächen der Ausnehmungen in der Transferschablone (20) ein herstellungsbedingter Schrumpfungsfaktor der Zähne, insbesondere der konfektionierten Zähne, einbezogen ist, welcher Faktor den Schrumpfungsgrad der Zähne (31, 33, 35, 37), insbesondere etwa ±100 µm, wiedergibt.

18. Verfahren nach einem der Ansprüche 13 bis 17, **dadurch gekennzeichnet, dass** in den Ausnehmungen (11) der Prothesenbasis (10) ein Klebespalt mit einer vorgegebenen Dicke, insbesondere teilweise 0 µm bis 500 µm, bevorzugt 50 µm bis 250 µm, derart eingebracht wird, dass bei der Festlegung der Höhenlage der Zähne (31, 33, 35, 37) durch die CAD/CAM-Vorrichtung der Klebespalt berücksichtigt werden kann, dass die Außenform um diesen Spalt größer als der zervikale Bereich der Zähne (31, 33, 35, 37) ist und so die Höhenlage jedes Zahns (31, 33, 35, 37) mittels der CAD/CAM-Vorrichtung exakt festlegbar ist.

## Claims

1. A dental positioning template system, with a positioning template and a prosthesis base, - both having a plurality of recesses for preformed teeth, incisal and/or occlusal regions fitting into the recesses of the positioning template, and cervical regions of preformed teeth fitting into the prosthesis base recesses (21), - the preformed teeth being adhesively bondable into the prosthesis base recesses (11), **characterized in that** - the transfer template (20) has an occlusal side (22) facing the occlusal plane, which serves as a height reference of the occlusal/incisal plane and is realized as a reference for the presence of occlusal interfering contacts, such that when inserting and positioning preformed teeth into the recesses of the prosthetic base by means of the positioning template, tooth areas (310) projecting beyond the occlusal side (22) of the transfer template (20) cause occlusal interfering contacts, and these tooth areas (310) are groundable for uniformly connecting tooth rows.

2. The dental transfer template assembly comprising a positioning template and a denture base according to Claim 1, **characterized in that** the adhesive surface of each tooth (31, 33, 35, 37), at the denture base (10), has a minimum threshold of at least 10 mm², preferably at least 18 mm, and especially preferably at least 25 mm².

3. The positioning template system according to Claim 1, **characterized in that** cervical regions of teeth are each insertable into the tooth recesses of the prosthesis base using the transfer template (20), and are adherable therein.

4. The positioning template system according to one of the preceding Claims, **characterized in that** the positioning template (20) is provided with recesses (21) for the preformed teeth (31, 33, 35, 37) and **in that** the inner surfaces of the recesses (21) in the positioning template (20) correspond to the occlusal/incisal outer surfaces of the teeth (31, 33, 35, 37).

5. The positioning template system according to one of the preceding Claims, **characterized in that** a bead or sheath is provided to increase the adhesive surface towards the incisal/occlusal direction so that the cervical region of the recesses (11) of the denture base (10) extends in the incisal/occlusal direction.

6. The positioning template system according to one of the preceding Claims, **characterized in that** a height level of the preformed teeth (31, 33, 35, 37) is defined, and **in that** the positioning template (20), and **in that** regions passing through the basal side of the prosthesis base (10) of a preformed tooth (31, 33, 35, 37), the height of which is greater than the height extension of the positioning template (20) and the prosthesis base (10), in the superimposed state thereof, essentially can be grounded in a manner to be flush.

7. The positioning template system according to one of the preceding Claims, **characterized in that** the tooth recesses (21) of the positioning template (20) define a position of the tooth (31, 33) in space, each tooth (31, 33) being held by the positioning template (20) with a portion of its longitudinal extent.

8. The positioning template system according to one of the preceding Claims, **characterized in that** the positioning template (20) and the denture base (10), in the assembled state, leave a free space, which surrounds the preformed teeth (31, 33), the height of the free space corresponding to a proportion of the height of the teeth (31, 33).

9. The positioning template system according to one of the preceding Claims, **characterized in that** the transfer template (20) and the prosthesis base (10) are supported together in the superimposed state via a plurality of supporting points, especially three supporting points, and when the preformed teeth (31, 33) are being inserted, they can be brought into a defined relative position in relation to each another.

10. The positioning template system according to one of the preceding Claims, **characterized in that** the positioning template (20), together with the denture base (10), firmly supports inserted teeth (31, 33) in all three spatial directions, and **in that** in this state any occlusal false contacts of the teeth (31, 33), which pass through the transfer template (20), can be abraded or milled off without additional and separate supporting contacts for the individual teeth (31, 33).

11. The positioning template system according to one of the preceding Claims, **characterized in that** window recesses of the positioning template (20) are arranged on each tooth (31, 33) on the vestibular side, so that the correct height position of the teeth (31, 33) in the inner surfaces of the recesses (21) within the positioning template (20) is controllable.

12. The positioning template system according to one of the preceding Claims, **characterized in that** the positioning template (20) is provided either for mandibular or maxillary denture prostheses.

13. A method for producing the transfer template system according to one of the preceding Claims, **characterized in that** the transfer template is produced with a CAD/CAM device and the prosthesis base is produced with a CAD/CAM device, especially with the same CAD/CAM device.

14. The method according to Claim 13, **characterized in that** the adhesive surface of each tooth (31, 33, 35, 37), at the prosthesis base (10), has a predetermined minimum threshold value, especially at least 10 mm², preferably at least 18 mm², and especially preferably at least 25 mm², which threshold value is defined in the CAD software of the CAD/CAM device to manufacture the prosthesis base.

15. The method according to Claim 14, **characterized in that** the threshold value determined in the CAD software of the CAD/CAM device is different for different tooth types - incisors, canines, premolars and molars - and, for the corresponding adaptation of the denture base (10), increasing the bonding surface of the preformed teeth to be received in the denture base is requested by the CAD software of the CAD/CAM device.

16. The method according to Claim 14 or 15, **characterized in that** the threshold value determined in the CAD software of the CAD/CAM device is different for different teeth (31, 33, 35, 37), especially for preformed teeth having different tooth lengths, and for the corresponding adaptation of the denture base (10), increasing the bonding surface of the preformed teeth to be received in the denture base is requested by the CAD software of the CAD/CAM device.

17. The method according to one of the preceding Claims 13-16, **characterized in that** a production-related shrinkage factor of the teeth, especially of the preformed teeth, is included in the calculation of the surfaces of the recesses in the positioning template (20), which factor reflects the degree of shrinkage of the teeth (31, 33, 35, 37), especially about ±100 µm.

18. The method according to one of the Claims 13 to 17, **characterized in that** an adhesive gap having a predetermined thickness, especially in part 0 µm to 500 µm, preferably 50 µm to 250 µm, is introduced into the recesses (11) of the denture base (10), such that when setting the height level of the teeth (31,33, 35, 37), the CAD/CAM device of the bonding gap may provide for the outer shape surrounding this gap being larger than the cervical area of the teeth (31, 33, 35, 37), and thus the height of each tooth (31, 33, 35, 37) can be precisely determined by means of the CAD/CAM device.

## Revendications

1. Arrangement de gabarit de transfert dentaire, avec un gabarit de transfert et une base de prothèse, - où tous les deux ont une pluralié de cavités pour des dents confectionnées et dans les cavités des gabarits de transfert des zones incisives et/ou des zones occlusales et dans les évidements de la base de la prothèse (21) des zones cervicales des dents confectionnées passent, - où les dents préfabriquées sont destinées à être collées dans les évidements de la base de la prothèse dentaire (11), **caractérisé en ce que** - le gabarit de transfert (20) présente une face occlusale (22) tournée vers le plan occlusal, qui sert de référence de la hauteur du plan occlusal/incisif et est implémentée comme référence pour la présence de contacts occlusaux perturbateurs de telle sorte que, lorsque des dents confectionnées sont insérées et positionnées dans les cavités de la base de la prothèse par le biais du gabarit de transfert, des régions de dents (310) faisant saillie au-dessus de la face occlusale (22) du gabarit de transfert (20) créent des contacts occlusaux perturbateurs et ces régions de dents (310) peuvent être poncées pour obtenir une rangées de dents uniforme.

2. Arrangement de gabarit de transfert dentaire, avec un gabarit de transfert et une base de prothèse selon la revendication 1, **caractérisé en ce que** la surface adhésive de chaque dent (31, 33, 35, 37) sur la base de la prothèse (10) a une valeur de seuil minimale d'au moins 10 mm², de préférence d'au moins 18 mm² et de manière particulièrement préférée d'au moins 25 mm².

3. Arrangement de gabarit de transfert dentaire selon la revendication 1, **caractérisé en ce que** des zones cervicales de dents peuvent être insérées dans les cavités de la base de la prothèse à l'aide du gabarit de transfert (20) et peuvent y être collées.

4. Arrangement de gabarit de transfert dentaire selon l'une des revendications précédentes, **caractérisé en ce que** le gabarit de transfert (20) est fourni de cavités (21) pour des dents confectionnées (31, 33, 35, 37) et que les surfaces intérieures des cavités (21) dans le gabarit de transfert (20), correspondent aux surfaces extérieures occlusales/incisives des dents (31, 33, 35, 37).

5. Arrangement de gabarit de transfert dentaire selon l'une des revendications précédentes, **caractérisé en ce qu'**un bourrelet ou une gaine est prévue pour l'élargissement de la surface adhésive en direction incisive/occlusale, afin d'étendre la zone cervicale des cavités (11) la base de la prothèse (10) en direction incisive/occlusale.

6. Arrangement de gabarit de transfert dentaire selon l'une des revendications précédentes, **caractérisé en ce qu'**une hauteur des dents confectionnées (31, 33, 35, 37) est définie dans le gabarit de transfert (20) et que le côté basal de la base de la prothèse (10) des zones pénétrantes d'une dent confectionnée (31, 33, 35, 37), dont la hauteur est supérieure à l'extension en hauteur du gabarit de transfert (20) et de la base de la prothèse (10) à l'état posé celles-ci l'une sur l'autre, peuvent essentiellement être poncées en affleurement.

7. Arrangement de gabarit de transfert dentaire selon l'une des revendications précédentes, **caractérisées en ce que** les cavités de dent (21) du gabarit de transfert (20) de la dent (31, 33) définissent une position des dents dans l'espace, où chaque dent (31, 33), est maintenue avec une partie de son extension longitudinale (20).

8. Arrangement de gabarit de transfert dentaire selon l'une des revendications précédentes, **caractérisé en ce que** le gabarit de transfert (20) et la base de la prothèse dentaire (10) à l'état assemblé, laissent un espace, qui entoure les dents confectionnées (31, 33), où la hauteur de l'espace correspond à une partie de la hauteur des dents (31, 33).

9. Arrangement de gabarit de transfert dentaire selon l'une des revendications précédentes, **caractérisé en ce que** le gabarit de transfert (20) et la base de la prothèse (10), à l'état posés l'un sur l'autre, reposent sur une pluralité de points d'appui, en particulier trois points d'appui, et peuvent être mis dans une position définie relative l'une à l'autre lorsque les dents confectionnées (31, 33) sont insérées.

10. Arrangement de gabarit de transfert dentaire selon l'une des revendications précédentes, **caractérisé en ce que** le gabarit de transfert (20), maintient des dents insérés ainsi que la base de la prothèse (10) fermement dans les trois directions spatiales, (31, 33) et que dans cet état d'éventuels faux contacts occlusaux des dents (31, 33), qui pénètrent le gabarit de transfert (20), sans contacts d'appui supplémentaires et séparés pour les dents individuelles (31, 33) peuvent être enlevés par ponçage ou fraisage.

11. Arrangement de gabarit de transfert dentaire selon l'une des revendications précédentes, **caractérisé en ce que** des ouvertures de fenêtre de gabarit de transfert (20) sont arrangées sur le côté vestibulaire sur chaque dent (31, 33), afin de pouvoir contrôler la hauteur correcte des dents (31, 33) dans les surfaces intérieures des cavités (21) dans le gabarit de transfert (20).

12. Arrangement de gabarit de transfert dentaire selon l'une des revendications précédentes, caractérisé que le gabarit de transfert (20) est fourni pour des prothèses mandibulaires ou maxillaires.

13. Méthodes de fabrication d'un arrangement de gabarit de transfert selon l'une des revendications précédentes, **caractérisé en ce que** le gabarit de transfert est fabriqué avec un dispositif de CFAO et que la base de la prothèse dentaire est fabriquée avec un dispositif de CFAO, en particulier avec le même dispositif CFAO.

14. Procédé selon la revendication 13, **caractérisé en ce que** la surface adhésive de chaque dent (31, 33, 35, 37) sur la base de la prothèse (10) présente une valeur seuil prédéterminée, en particulier au moins 10 mm², de préférence au moins 18 mm² ans et de manière particulièrement préférée au moins 25 mm², est, cette valeur seuil étant définie dans le logiciel CAO du dispositif CFAO pour la production de la base de la prothèse.

15. Procédé selon la revendication 14, **caractérisé en ce que** la valeur seuil définie dans le logiciel de CAO du dispositif CFAO est différent pour différents types de dents - incisives, canines, prémolaires et molaires - et pour l'ajustement correspondant de la base de prothèse (10) une augmentation de la surface adhésive des dents confectionnées à être accueillies dans la base de la prothèse est demandé par le logiciel de CAO du dispositif CFAO.

16. Procédé selon la revendication 14 ou 15, **caractérisé en ce que** la valeur seuil définie dans le logiciel de CAO du dispositif CFAO est différent pour différentes dents (31, 33, 35, 37), en particulier pour les dents confectionnés de différentes longueurs de dent et pour l'ajustement correspondant de la base de prothèse (10) une augmentation de la surface adhésive des dents confectionnées à être accueillies dans la base de la prothèse est demandé par le logiciel de CAO du dispositif CFAO.

17. Procédé selon l'une des revendications précédentes 13-16, **caractérisé en ce que**, lors du calcul des surfaces des cavités dans le gabarit de transfert (20) un facteur de rétrécissement des dents dû à la fabrication, en particulier dans le cas des dents confectionnées, est pris en compte, ledit facteur donnant le degré de rétrécissement des dents (31, 33, 35, 37), en particulier environ ± 100 µm.

18. Procédé selon l'une des revendications 13 à 17, **caractérisé en ce que** dans les cavités (11) de la base de la prothèse (10), une fente de collage avec une épaisseur spécifiée, en particulier partiellement de 0 µm à 500 µm, de préférence de 50 µm à 250 µm, est introduit de telle manière que lors du réglage de la hauteur des dents (31, 33, 35, 37) au moyen du dispositif de CFAO la fente de collage peut être prise en compte, que la forme externe autour de cette fente est plus grande que la zone cervicale de la dent (31, 33, 35, 37) et ainsi la hauteur de chaque dent (31, 33, 35, 37) par le biais du dispositif de CFAO peut être précisément définie.
